(19) Europäisches Patentamt
European Patent Office
Office européen des brevets

(11) Veröffentlichungsnummer: **0 122 487 B1**

(12) **EUROPÄISCHE PATENTSCHRIFT**

(45) Veröffentlichungstag der Patentschrift: **06.03.91**

(51) Int. Cl.5: **G01N 27/90**

(21) Anmeldenummer: **84102961.4**

(22) Anmeldetag: **17.03.84**

# (54) Einrichtung zum Prüfen der Oberfläche eines metallischen Prüfteiles.

(30) Priorität: **16.04.83 DE 3313820**

(43) Veröffentlichungstag der Anmeldung:
**24.10.84 Patentblatt 84/43**

(45) Bekanntmachung des Hinweises auf die Patenterteilung:
**06.03.91 Patentblatt 91/10**

(84) Benannte Vertragsstaaten:
**FR GB SE**

(56) Entgegenhaltungen:
**EP-A- 0 012 665**
**EP-A- 0 068 503**
**GB-A- 2 086 057**
**US-A- 4 061 968**
**US-A- 4 383 218**

**PATENT ABSTRACTS OF JAPAN, Band 7, Nr. 117 (P-198)[1262], 21. Mai 1983 & JP-A-58-35 455**

(73) Patentinhaber: **Institut Dr. Friedrich Förster Prüfgerätebau GmbH & Co. KG**
**Postfach 925 In Laisen 70**
**W-7410 Reutlingen 1(DE)**

(72) Erfinder: **Neumaier, Peter**
**Grötzinger Strasse**
**W-7441 Neckartailfingen(DE)**
Erfinder: **Selig, Klaus Peter, Dr.**
**Oberhauser Strasse 1**
**W-7451 Bechtoldsweiler(DE)**

**EP 0 122 487 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine Einrichtung zum Prüfen der Oberfläche eines metallischen Prüfteiles mittels Wirbelströmen gemäß dem Oberbegriff von Patentanspruch 1.

Aus DE-A 17 73 501 ist ein Wirbelstromprüfgerät bekannt, bei dem der Abhängigkeit des Prüfsignales vom Abstand der Sonde zur Prüfteiloberfläche dadurch entgegengewirkt wird, daß bei der Verarbeitung des Prüfsignales ein steuerbarer Verstärker benutzt wird, der durch ein ebenfalls vom o.g. Abstand abhängiges Steuersignal gesteuert wird. Dabei erwies es sich als schwierig, innerhalb des gewünschten Regelbereiches drei gegebene nichtlineare Funktionen aufeinander abzustimmen: die Funktion der Steuerspannung vom Prüfteilabstand, die Funktion der Prüfsignalhöhe vom Prüfteilabstand und die Funktion der Verstärkung des steuerbaren Verstärkers von der Steuerspannung. Obwohl dies in der Praxis nur innerhalb eines kleinen Bereiches gelang, konnten Geräte dieser Art während eines längeren Zeitraums erfolgreich eingesetzt werden. In DE-A 25 3O 816 ist ein Wirbelstromprüfgerät beschrieben, bei dem die genannte Schwierigkeit dadurch umgangen wurde, daß man beim steuerbaren Verstärker eine Anzahl durch Widerstände fest eingestellter Verstärkungsabstufungen vorsah, die entsprechend dem Verlauf der oben genannten ersten beiden Funktionen dimensioniert waren und von der sich ändernden Steuerspannung ausgewählt wurden. Die dazu notwendige Digitalisierung der Steuerspannung wurde durch eine Kette von Schaltstufen mit gleichförmig abgestuften Schwellspannungen realisiert, an deren Eingänge die Steuerspannung gelegt wurde. Über elektronische Schalter konnten die Widerstände gewählt werden, die die Verstärkung des steuerbaren Verstärkers bestimmen.

Auch das zuletzt behandelte Prinzip hat sich in der Praxis bewährt, insbesondere in seiner Anwendung auf ein Rotierkopfprüfgerät. Es bleiben ihm jedoch die Anwendungen verschlossen, bei denen das Prüfsignal zerlegt in zwei aufeinander senkrecht stehende Komponenten X und Y weiterbehandelt und analysiert wird. Das ergibt sich aus den folgenden Umständen. Je nach willkürlich durch Einstellglieder vorgewählter Phasenlage ergeben sich unterschiedliche Komponentenwerte X und Y. Ändert sich, was im allgemeinen der Fall ist, mit der Änderung des Prüfteilabstandes auch der Phasenwinkel, so wirkt sich dies auch auf die Größe der X und Y - Werte aus und würde, auch wenn keine gleichzeitige Änderungen der Vektoramplitude stattfände, zu neuen Werten X' und Y' führen. Dabei hängen die beiden neuen Werte X' und Y' sowohl von der Winkeländerung als auch vom ursprünglichen Wert X und vom ursprünglichen Wert Y, also von drei verschiedenen Größen ab. Daher können Änderungen des Prüfteilabstandes sich je nach der ursprünglichen Phasenlage ganz unterschiedlich auswirken. Während normalerweise die Prüfsignalgröße mit zunehmendem Prüfteilabstand kleiner wird, kann z.B. die X oder Y - Komponente für sich allein mit steigendem Abstand auch größer werden.

Bei Wirbelstromprüfung mit nur einer Frequenz stellt man zur Auswertung von X' Y - Koordinaten die Phasenlage häufig so ein, daß bekannte Störsignale in eine bestimmte Richtung, z.B. die X-Richtung fallen, und wertet nur das Y-Signal weiter aus, das dadurch von Störanteilen weitgehend frei geworden ist. Muß man jedoch auf eine Steuerung des Prüfsignales duch ein abstandsabhängiges Steuersignal verzichten und treten nennenswerte Schwankungen des Prüfteilabstandes auf, so verursachen diese auf Grund der damit verbundenen Phasendrehungen der Störsignale ein unverhältnismäßig starkes Ansteigen der Störsignale. Oft wird eine sinnvolle Prüfung dadurch unmöglich gemacht oder zumindest erschwert. Bei der Wirbelstromprüfung mit mehreren Frequenzen fn können die erhaltenen Parameter, also die Werte X(fn) und Y(fn) bei den verschiedenen Frequenzen durch Koeffizienten Km so miteinander verknüpft werden, daß ein neues Signal "S" entsteht, das von Störanteilen weitgehend frei ist, so z.B. bei zwei Frequenzen nach folgender Formel:

$S = X(f1) . K1 + Y(f1) . K2 + X(f2) . K3 + Y(f2) . K4$ Bei unkompensierter Änderung des Prüfteilabstandes und der dadurch bewirkten Phasendrehung, ändern sich auch die Verhältnisse der Größen x(f1) ; Y(f1); X(f2); Y(f2) untereinander, so daß mit den gegebenen Koeffizienten K1 bis K4 keine optimale Störunterdrückung mehr möglich ist. Ein starkes Ansteigen der Störanteile wird demnach bei nennenswerten Schwankungen des Prüfteilabstandes unausweichlich.

Wird für die Regelung des Prüfsignales eine größere Auf-lösung gefordert, so steigt der Aufwand des beschriebenen Wirbelstromprüfgerätes stark an. Soll z.B. eine Auflösung von 6 bit realisiert werden, so werden 64 Schaltstufen mit unterschiedlichen Schwellwerten nötig. Dabei wird auch der Abgleich der die Verstärkung bestimmenden Widerstandswerte zunehmend aufwendiger.

Die Erfindung macht sich demgegenüber zur Aufgabe, eine Einrichtung der im Oberbegriff von Anspruch 1 definierten Art zu schaffen, die geeignet ist, auch solche Prüfsignale zu verarbeiten, die in zwei aufeinander senkrecht stehende Komponenten zerlegt sind, und bei der andererseits auch bei geforderter höherer Auflösung der Regelung des Prüfsignales der notwendige Aufwand im Rahmen bleibt. Ein anderer Teil der Aufgabe betrifft die Erstellung eines Verfahrens zum Betreiben dieser Einrichtung.

Diese Aufgabe wird gelöst durch eine Einrichtung, die gemäß Anspruch 1 gekennzeichnet ist.

Durch die erfindungsgemäße Lösung wird es möglich, sowohl in X, Y, - Koordinaten als auch in Polarkoordinaten zerlegte Prüfsignale unabhängig von der vorliegenden Phasenlage in Abhängigkeit vom Abstand der Sonde zur Prüfteiloberfläche zu steuern und so über einen weiten Abstandsbereich konstant zu halten. Dabei gelingt es - abgesehen von der gewünschten Konstanthaltung des Verhältnisses von Fehlertiefe zu Fehlersignalgröße, ohne die keine sinnvolle Fehlersignalauswertung möglich ist - den Nutz/Störsignalabstand in vielen Fällen entscheidend zu verbessern, insbesondere bei der Anwendung mehrerer Frequenzen. Die Auflösung der Regelung kann im Rahmen des Wünschenswerten praktisch beliebig vergrößert werden. Dabei steigt der Aufwand wesentlich weniger an, als den gegebenen Verhältnissen entspricht.

Es wird ferner möglich, die Einstellung der entsprechenden Abgleichparameter für eine beliebige Sonde automatisch und in kürzester Zeit durchzuführen. Vorteilhafte Ausgestaltungen der Erfindung ergeben sich aus den Unteransprüchen.

Im folgenden ist die Erfindung an Hand einiger Figuren und vermittels von Ausführungsbeispielen näher erläutert. Es zeigen im einzelnen:

Figur 1
eine Wirbelstromprüfsonde über einer Prüfteiloberfläche
Figur 2,3,4, a-4c
Diagramme
Figur 5
Blockschaltbild einer Prüfeinrichtung
Figur 6
Amplitudensteuerglied
Figur 7
Phasensteuerglied
Figur 8
Phasensteuerglied, Detailausführung
Figur 9
alternative Prüfeinrichtung, Teildarstellung

In Figur 1 ist eine Wirbelstrompüfsonde 10, wie sie bei der Ausführung der vorliegenden Erfindung unter anderem Verwendung finden kann, oberhalb der Oberfläche 12 eines metallischen Prüfteiles 14, z.B. einer Bramme, dargestellt. Die Sonde 10 besitzt eine Erregerwicklung 16, eine Empfängerwicklung 18 und einen zylindrischen Kern 20 aus ferritischem Material. Die Erregerwicklung 16 wird von einem Wechselstrom einer bestimmten oder auch mehrerer Frequenzen durchflossen. Das hierdurch erregte magnetische Wechselfeld durchsetzt die Oberfläche 12 und erzeugt Wirbelströme unter der Oberfläche, die ihrerseits ein magnetisches Gegenfeld aufbauen und mit diesem auf die Sonde zurückwirken. Die Empfängerwicklung 18 besitzt zwei gegenläufig gewickelte Teilwicklungen 22, 24, von denen die eine unterhalb, die andere oberhalb der Erregerwick-lung 16 auf den Kern 20 aufgebracht ist. Naturgemäß werden die Wirbelstromrückwirkungen von der näher gelegenen Teilwicklung 22 stärker erfaßt. Die Anordnung der Sonde 10 ist bewußt nicht so ausgelegt, daß sich bei gänzlich abgehobener Sonde, d.h. bei unendlich großem Abstand h zwischen Sonde 10 und Oberfläche 12, die Spannungen in den Teilwicklungen 22, 24 voll herausheben, vielmehr soll die Spannung an den Klemmen der Empfängerwicklung 18 in Abhängigkeit vom Abstand h etwa einen Verlauf gemäß Figur 2 haben. Auch bei aufsitzender Sonde 10, d.h. bei Abstand h = O, soll noch eine Restspannung vorhanden sein. Damit ist ein Steuersignal SA gegeben, daß zur eindeutigen Abstandssteuerung, d.h. zur Steuerung in Abhängigkeit vom Abstand h geeignet ist.

Das eigentliche Fehlersignal, das dazu dienen soll einen Fehler, z.B. eine Spalte 26, durch eine der Fehlergröße proportionale Fehlersignalhöhe anzuzeigen, wird im vorliegenden Beispiel der gleichen Empfängerwicklung 18 entnommen. Man gewinnt das Fehlersignal, wie weiter unten noch näher erläutert, durch Abtrennen der Trägerrestspannung, d.h. indem man die Signalspannung demoduliert und durch ein Hochpaßfilter schickt, das nur die steile Änderung der Signalspannung durchläßt, die beim schnellen Überlaufen des Fehlers 26 durch Sonde 10 entsteht. Langsame Änderungen des Abstandes h, die etwa durch Führungsungenauigkeiten hervorgerufen werden, haben so zwar kein eigenes Signal zur Folge, beeinflussen aber in starkem Maße die Empfindlichkeit der Fehlersignalanzeige und damit die Proportionalität zwischen Fehlergröße und Fehlersignalhöhe. Figur 3 zeigt wie in Abhängigkeit vom Abstand h die Fehlersignalhöhe rasch abnimmt.

Gestalt und Beschaffenheit der Oberfläche 12 des Prüfteiles 14 üben jedoch noch einen weiteren Einfluß auf das Prüfergebnis aus, indem sie nämlich Ursache für die Entstehung von Störsignalen sind. So bewirken beispielsweise sogenannte Oszillationsmarken 28, wie sie beim Stranggießen an der Oberfläche einer Bramme entstehen können, Störsignale, deren Höhe häufig in der gleichen Größenanordnung wie der von nicht mehr zulässigen Fehlern liegt. Zum Glück unterscheiden sich diese Störsignale meist in der Phasenlage von den Fehlersignalen. Ihre Unterdrückung wird daher möglich, wenn Betrag und Phase oder zwei aufeinander senkrecht stehende Komponenten des Prüfsignales für eine weitere Signalanalyse zur Verfügung stehen. Es lassen sich sogar mehrere voneinander unabhängige Störgrößen unterdrücken, wenn man mit mehreren Frequenzen arbeitet und die dabei erhältlichen Parameter in zweckdienlicher Weise miteinander verknüpft. Hier soll der Einfachheit halber an Hand von Figur 4a der Fall der Unterdrückung nur einer Störgröße bei Einsatz einer Prüffrequenz betrachtet werden. Zu diesem Zweck ist in einer Karthesischen Ebene mit den Koordinaten X, Y eine erste Kurve 30 dargestellt, die den Weg beschreibt, den die Spitze des Fehlersignalvektors zurücklegt, während die Sonde 10 über den Fehler 26 gleitet. Demgegenüber entspricht Kurve 32 einem Störsignal, z.B. hervorgerufen durch eine der Marken 28. Man dreht nun vermittels eines Phasenschiebers alle Prüfsignale um einen Winkel $\zeta$ und erhält ein Bild gemäß Figur 4b mit neuen Kurven 34, 36 für Fehler- und Störsignal, bei dem das Störsignal im wesentlichen in die x-Richtung fällt. Wertet man jetzt nur die in y-Richtung fallenden Signale aus, so ergibt sich weitgehende Störfreiheit.

Die Figuren 4a und 4b gelten für einen bestimmten Prüfteilabstand h1. Figur 4c zeigt die Verhältnisse für einen veränderten, größeren Abstand h2. Die Signalkurven 38,40 von Fehler und Störer haben sich nicht nur dem Betrag nach geändert. Zwar bleibt der Winkel $\Delta\ \zeta$ zwischen den beiden Signalkurven 38,40 im wesentlichen unverändert, doch haben sich die beiden Signalkurven gemeinsam um einen Winkel $\alpha$ gegenüber dem vorherigen Zustand gedreht. Das bedeutet zum einen, daß die Störsignalkurve 40 aus der x-Richtung heraus gedreht wurde, mithin in der y-Richtung wieder ein Störsignal vorhanden ist, zum anderen, daß das Fehlersignal in der y-Richtung überproportional geschwächt worden ist. Hieraus resultiert ein starker Abfall des Nutz/Störsignalabstandes, der durch die bisher bekannte Art der Nachsteuerung nicht wieder wettgemacht werden kann.

Figur 5 zeigt das Blockschaltbild einer erfindungsgemäßen Wirbelstromprüfeinrichtung, die auch für den zuvor beschriebenen Fall eine Steuerung der Fehlersignale ermöglicht, mit dem Ziel, innerhalb eines weiten Bereiches die Höhe und den Störabstand der Fehlersignale unabhängig vom Abstand h konstant zu halten. Ein Wechselstromgenerator 42 speist die Erregerwicklung 16 der bereits weiter oben beschriebenen Wirbelstromprüfsonde 10. Aus der Empfängerspule 18 mit den gegeneinander geschalteten Teilwicklungen 22, 24 werden sowohl die Fehler - , als auch die Abstandssteuersignale abgeleitet. Selbstverständlich ist es jederzeit auch möglich, die Abstandssteuersignale aus eigenen Empfängerwicklungen oder aus separaten Schaltmitteln abzuleiten. Der Ausgang der Empfängerwicklung 18 ist über einen Vorverstärker 44 mit dem Eingang 46 einer phasenselektiven Demodulatorschaltung 48 verbunden. Diese besitzt Steuereingänge 50, 52, die über Leitungen 54, 56 vom Generator 42 mit Steuersignalen der Phasenlage 0° und 90° des Erregersignales versorgt werden. An den Ausgängen 58, 60 der Demodulatorschaltung 48 stehen zwei aufeinander senkrecht stehende Komponenten X und Y des komplexen Fehlersignales zur Verfügung. Diese werden in einer Tiefpaßfilteranordnung 62 geglättet und gelangen über eine Schalteranordnung 64, die zur Einstellung der jeweils gewünschten Empfindlichkeit dient, zu einer Hochpaßfilteranordnung 66. Durch die Letztere werden die gleichgerichteten Trägerrestspannungen abgetrennt und lediglich die Teile der Komponenten X, Y, weitergeleitet, die auf von Fehlern verursachte schnelle Änderungen des Prüfsignales in der Sonde 10 zurückgehen. Auf Hochpaßfilteranordnung 66 folgt eine Phasenschieberanordnung 68, in der die verbliebenen Komponenten X, Y um den für die Signalanalyse notwendigen Winkel gedreht werden können.

Das Signal aus Empfängerwicklung 18 der Sonde 10, in dem wie oben erläutert ja auch die Information gemäß Figur 2 über den Abstand h steckt, wird dem Eingang einer Demodulatorschaltung 70 zugeführt. Von deren Ausgang gelangt das erhaltene Steuersignal an einem Anpassungsglied 72, von dort zu einem Analog-Digital-Wandler 74- Das Anpassungsglied 72 dient dazu, die Steuersignale in Amplitude und Bandbreite an die geforderten Eingangswerte des nachfolgenden Wandlers 74 anzupassen. Die im Anpassungsglied 72 zu diesem Zweck enthaltenen Filterglieder unterdrücken gleichzeitig auch Trägerrest-und Fehlersignalanteile. Der Wandler 74 liefert an seinem Informationsausgang 76 in Zeitschritten Digitalwerte, die der jeweils vorliegenden analogen Information am Informationseingang 78 entsprechen. Ein Zeitschrittgeber 80 steuert diese Zeitschritte und ist zu diesem Zweck mit dem Wandler 74 durch eine erste Steuerleitung 82 verbunden. Ober eine zweite Steuerleitung 84 erfährt er vom Wandler 74, wann die Bildung eines neuen Digitalwertes abgeschlossen ist. Selbstverständlich kann die Analog-Digital-Umsetzung auch in einem festen Takt erfolgen. Ein Datenbus 86 übermittelt die Digitalwerte auf den Eingang eines Zwischenspeichers 88, an dessen Ausgang die Digitalinformation, gesteuert wiederum über eine Steuerleitung 90, in den gegebenen Zeitschritten angeboten wird. Datenbus 92 führt diese Information an die Adresseneingänge zweier programmierbarer Datenspeicher 94 und 96, bei denen es sich z.B. um sogenannte EPROM's (erasably programmable read only memory) handeln kann. Der Datenausgang des Datenspeichers 94 ist über einen Datenbus 98 mit den Steuereingängen 100, 102 zweier digital steuerbarer Amplitudensteuerglieder 104, 106 verbunden, an deren Signaleingängen 108, 110 die x, y - Signale aus Phasenschieber 68 liegen. An den Signalausgängen 112, 114 der Glieder 104, 106 ergeben sich x', y' - Signale, die nach Maßgabe der Informationen an den Steuereingängen 100, 102 im Betrag abgeändert sind.

Der Datenausgang des Datenspeichers 96 ist über einen Datenbus 116 mit dem Steuereingang 118 eines digital steuerbaren Phasensteuergliedes 120 verbunden, an dessen Signaleingängen 122, 124 die X', y' - Signale der Ausgänge 112, 114 liegen. An den Signalausgängen 126, 128 des Gliedes 120 ergeben sich x", y" - Signale, die nach Maßgabe der Informationen am Steuereingang 118 im Phasenwinkel abgeändert sind. Die x", y" - Signale an den Ausgängen 126, 128 stehen für die weitere Analyse und Auswertung in der bekannten Weise zur Verfügung.

Die Amplitudensteuerglieder 104, 106 können im Prinzip etwa gemäß Figur 6 aufgebaut sein. Ein Schaltglied 130 mit sechs elektronischen Schaltern 132 wird von einem 6-bit Datenbus 98 in der Weise gesteuert, daß je nach Informationsinhalt auf dem Datenbus eine entsprechende Kombination von Schaltern betätigt ist. Sechs in Kette geschaltete Widerstände R1 bis R6 sind mit den Kontakten der Schalter 132 verbunden und können durch Öffnen der Kontakte einzeln oder in beliebiger Kombination eingeschaltet werden. Die Widerstände R1 bis R6 bilden in Serie mit dem Widerstand Ro und mit dem Widerstand R den Gegenkopplungsteiler eines Rechenverstärkers 134 und bestimmen dessen Verstärkung:

$$V = \frac{Ro + \Sigma Rn}{R}$$

Dabei bedeutet $\Sigma$ Rn jede beliebige Summe aus Widerständen R1 bis R6. Die Werte X',Y' ergeben sich aus den Werten X, Y durch eine entsprechende Steuerung des Schaltgliedes 130. In der Praxis wird man als Amplitudensteuerglieder 104, 106 im Handel erhältliche multiplizierende Digital/Analog-Wandler einsetzen. Diese enthalten fertig verschaltet neben einer Widerstandskette bereits einen zugehörigen Satz binär kodierter Schalter.

In ähnlicher Weise wie bei den Amplitudensteuergliedern sollen sich durch das Phasensteuerglied 120 aus den Werten X', Y' die Werte X", Y" ergeben, deren Vektor bei gleichbleibendem Betrag um einen Winkel $\alpha$ gedreht ist. Rechnerisch findet eine derartige Koordinatentransformation nach den folgenden Funktionen statt:

$$x'' = x' \cos\alpha - y' \sin\alpha$$
$$y'' = x' \sin\alpha + y' \cos\alpha$$

Figur 7 zeigt, wie sich diese Funktionen in der Praxis realisieren lassen. Man benutzt dazu zwei gleiche Funktionspotentiometer 136, 138 mit jeweils zwei gegenläufig drehenden, einstellbaren Abgriffen 140, 142, 144, 146. Am Abgriff 140 ergibt sich gegenüber dem Eingang des Potentiometers 136 ein Teilungsverhältnis, das dem Cosinus des eingestellten Winkels $\alpha$ entspricht. Am Abgriff 142 ergibt sich ein Teilungsverhältnis, das dem Sinus des eingestellten Winkels $\alpha$ entspricht. Speist man nun die beiden Potentiometer 136, 138 mit den Werten X' und Y', so erhält man an den vier Abgriffen 140, 142, 144, 146 die Produkte X'cos $\alpha$, X'sin $\alpha$, Y'cos $\alpha$ und Y'sin $\alpha$. Setzt man diese Produkte unter Einsatz eines Invertiergliedes 148 und zweier Summierglieder 150, 152 vorzeichenrichtig zusammen, so stellen sich an den Ausgängen der Summenglieder die gewünschten Werte x", y" ein. Nach Figur 8 sind die Potentiometer 136, 138 durch eine Teilerkette 154 mit Widerständen 156 ersetzt, die Abgriffe 140, 142, 144, 146 durch ein Schaltglied 158 mit einer Vielzahl von elektronischen Einzelschaltern 160, das von dem Datenbus 116 gesteuert wird. An jede Widerstandsklemme der Teilerkette 154 sind jeweils zwei Schalter 160 angeschlossen. Die Ausgänge der Schalter 160 sind in zwei Gruppen zusammengeschaltet, von denen, bei entsprechender Steuerung des Schaltgliedes 158, die eine Cosinus-Werte, die andere Sinus-Werte ausgibt. Hat man zwei Teilerketten 154 mit zugehörigem Schaltglied 158 vorgesehen und speist man die Eingänge der beiden Teilerketten mit X' und Y'-Werten, so ergeben sich wiederum die Produkte x'cos$\alpha$, x' sin$\alpha$, y' cos$\alpha$, y sin$\alpha$ die in Analogie zu Figur 7 zu den Werten x" und y" zusammengesetzt werden.

Auch hier bietet es sich an, im Handel erhältliche multiplizierende Digital/Analog-Wandler anstelle von Teilerketten und Schaltgliedern einzusetzen.

Die Arbeisweise der Figuren 5 - 8 kann man sich wie folgt vorstellen. Die Prüfsignale werden in bekannter Weise vorverstärkt, demoduliert und gefiltert. Danach durchlaufen sie die auf die erforderlichen Werte eingestellten Stellglieder 64, 66, 68. Das Abstandssignal wird im Demodulator 70 demoduliert, nach Anpassung durch Anpassungsstufe 72 vom Wandler 74 digitalisiert und im Zwischenspeicher 88 gespeichert. Ober den Datenbus 92 werden die Adressen der Datenspeicher 94, 96 gemäß den Informationen des Zwischenspeichers 88, die ja dem Abstand h entsprechen, ausgewählt. Die Datenspeicher 94, 96 steuern nach einprogrammierten Werten die Steuerglieder 104, 106 und 120. Sie halten damit Betrag und Phase der Fehlersignalkomponenten X, Y auf vom Abstand h unabhängigen Werten X", Y".

Die Programmierung kann im einfachsten Fall so erfolgen, daß man zunächst im in Frage kommenden Bereich die den verschiedenen Abstandswerten h entsprechenden Digitalgrößen feststellt, daß man ferner feststellt, welche Digitalgrößen an den Steuereingängen 100, 102 und 118 notwendig sind, um bei den verschiedenen Abstandswerten h die Komponenten X", Y" in Betrag und Phase auf den gleichen Wert zu halten. Die gefundenen Werte brauchen dann nur noch in der vom Hersteller vorgeschriebenen Weise in die Datenspeicher 94, 96 einprogrammiert zu werden.

Es ist jedoch auch ohne weiteres möglich, die Programmierung durch einen Tischrechner vornehmen zu lassen. Dieser erhält dann direkt die genannten Informationen und gibt entsprechende Informationen an ein Programmiergerät ab, das an die beiden Datenspeicher 94, 96 angeschlossen ist. Auf diese Weise läßt sich jede Programmierung schnell und einfach durchführen.

Für unterschiedlich konstruierte Sonden ist auf jeden Fall eine individuelle Programmierung erforderlich. Sonden der gleichen Bauart lassen im allgemeinen eine so gute Reproduzierung ihrer Eigenschaften zu, daß die Verwendung einer einheitlichen Programmierung möglich ist. Wenn jedoch entsprechend hohe Ansprüche gestellt werden, so ist es denkbar, daß für jede einzelne Sondenausführung eine besondere Programmierung nötig wird. Es kann in diesem Fall zweckmäßig sein, schon bei der Herstellung der Sonde je einen Datenspeicher 94 und 96, z.B. in Form eines PROM, mit der erforderlichen Programmierung zu versehen und zusammen mit der Sonde zu lagern. Beim Einbau einer solchen Sonde als Ersatz für eine andere, können dann ohne weiteres die beiden PROM's mit ausgetauscht werden, so daß kein neuer Abgleich erforderlich wird.

Figur 9 zeigt eine alternative Einrichtung für den Fall, daß das Fehlersignal statt in Karthesischen Koordinaten in Polarkoordinaten angeboten wird. Es liegen dann Fehlersignale für den Betrag /A/ und für den Winkel ϕ vor. In diesem Fall ist nur ein Amplitudensteuerglied 160 neben dem Phasensteuerglied 162 nötig. Da im vorliegenden Fall das Phasensignal ϕ als einfache Analoggröße gegeben ist, kann das Phasensteuerglied 162 in seinem Aufbau dem Aufbau eines Amplitudensteuergliedes, z.B. desjenigen nach Figur 6, entsprechen. Die Datenspeicher 164 und 166, wie auch Zwischenspeicher 88, Wandler 74, Zeitschrittgeber 80 und die übrigen in Figur 9 nicht mehr dargestellen Glieder können ohne weiteres von Figur 5 übernommen werden.

## Ansprüche

1. Einrichtung zum Prüfen der Oberfläche (12) eines metallischen Prüfteiles (14) auf Inhomogenitäten (26), mit mindestens einer Prüfsonde (10), die in der zu prüfen-den Oberfläche (12) Wirbelströme hervorruft und an deren Ausgang in Abhängigkeit von den Inhomogenitäten auf Grund von Rückwirkungen der Wirbelströme auf die Prüfsonde (10) ein Prüfsignal entsteht, das vom Abstand (h) der Prüfsonde (10) zur zu prüfenden Oberfläche (12) moduliert ist, mit Mitteln zum Zerlegen des Prüfsignales in einen Realteil (x) und einen Imaginärteil (y) bzw. in einen Betrag (/A/) und einen Winkel (ϕ ), mit einer digitalen Steuereinrichtung (104, 106, 120; 160, 162) zum Steuern des Prüfsignales, mit Mitteln zum Ableiten eines digitalen Steuersignales (74, 80, 88), dessen Höhe vom Abstand (h) der Prüfsonde zur zu prüfenden Oberfläche abhängt, dadurch gekennzeichnet daß die Mittel zum Ableiten des digitalen Steuersignales (74, 80, 88) dieses Steuersignal in festen oder variablen Zeitschritten an ihrem Ausgang anbieten, daß dieser Ausgang mit dem Adresseneingang mindestens zweier programmierbarer Datenspeicher (94, 96) verbunden ist, wobei das digitale Steuersignal einprogrammierten Werten zugeordnet wird, daß die digitale Steuereinrichtung (104, 106, 120; 160, 162) derart ausgestaltet ist, daß für Realteil (x), Imaginärteil (y) und den zugehörigen Phasenwinkel, bzw. für Betrag (/A/) und Winkel (ϕ ) des Prüfsignals jeweils eigene digitale Steuerelemente (104, 106, 120; 160, 162) vorgesehen sind, daß die Datenausgänge der programmierbaren Datenspeicher (94, 96) mit den Steuereingängen (100, 102, 118) der jeweiligen Steuereinrichtungen (104, 106, 120; 160, 162) verbunden sind und diese in der Weise steuern, daß das Prüfsignal nach Betrag und Phase vom Abstand (h) unabhängig wird.

2. Einrichtung nach Anspruch 1, dadurch gekennzeichnet, daß die digitale Steuereinrichtung (104, 106, 120; 160, 162) zwei Glieder (104, 106) zur digitalen Steuerung der Beträge von Realteil (x) und Imaginärteil (y) des Prüfsignales aufweist, die von einem gemeinsamen Datenspeicher (94) gesteuert werden und daß ferner die digitale Steuereinrichtung (104, 106, 120; 160, 162) ein Glied (120) zur Phasensteuerung des Prüfsignales aufweist, das hinter oder vor die erstgenannten Glieder (104, 106) geschaltet ist und das von einem eigenen Datenspeicher (96) gesteuert wird.

3. Einrichtung nach Anspruch 2, dadurch gekennzeichnet, daß die Glieder (104, 106) zur digitalen Steuerung der Beträge von Realteil (x) und Imaginärteil (y) des Prüfsignales durch im Handel erhältliche multiplizierende Digital/Analog-Wandler realisiert werden.

4. Einrichtung nach Anspruch 1, dadurch gekennzeichnet, daß bei Vorliegen des Prüfsignales in Polarkoordinaten als Betrag (/A/) und Winkel ($\phi$ ) ein digital steuerbares Glied (160) zur Steuerung des Betrages (/A/) und ein weiteres digital steuerbares Glied (162) zur Steuerung des Winkels ($\phi$ ) vorgesehen sind, die jeweils von getrennten Datenspeichern (164, 166) gesteuert werden.

5. Einrichtung nach einem der vorhergehenden Ansprüche, dadurch gekennzeichnet, daß als Datenspeicher (94, 96; 164, 166) PROMs oder EPROMs benützt werden.

6. Einrichtung nach einem der vorhergehenden Ansprüche, dadurch gekennzeichnet, daß das digitale Steuersignal, dessen Höhe vom Abstand (h) zur zu prüfenden Oberfläche abhängt, aus der gleichen Wicklung (18) der Prüfsonde (10) gewonnen wird wie das Prüfsignal.

## Claims

1. apparatus for testing the surface (12) of a metallic test piece (14) for inhomogeneities (26), with at least one test probe (10) which establishes eddy currents in the surface (12) to be tested and at the output of which a test signal results in dependence on the inhomogeneities, on account of the feedback effect of the eddy currents on the test probe (10), which test signal is modulated by the spacing (h) of the test probe (10) from the surface (12) to be tested, with means for resolving the test signal into a real part (x) and an Imaginary part (y) or into a magnitude (/A/) and an angle ($\phi$ ), with a digital control device (104, 106, 120; 160, 162) for controlling the test signal, with means for deriving a digital control signal (74, 80, 88) whose level depends on the spacing (h) of the test probe from the surface to be tested, characterized in that the means for deriving the digital control signal (74, 80, 88) makes this control signal available at its output at fixed or variable intervals of time, in that this output is connected to the address input of at least two programmable data memories (94, 96), the digital control signal having programmed values allocated thereto, in that the digital control device (104, 106, 120; 160, 162) is so constructed that respective individual digital control elements are provided for real part (x), imaginary part (y) and the corresponding phase angle, or for magnitude (/A/) and angle ($\phi$) of the test signal, in that the data outputs of the programmable data memories (94, 96) are connected to the control inputs (100, 102, 118) of the respective control devices (104, 106, 120; 160, 162) and control these In such a manner that the test signal is independent of the spacing (h) in magnitude and phase.

2. Apparatus according to claim 1, characterized in that, the digital control device (104, 106, 120; 160, 162) comprises two components (104, 106) for digital control of the magnitudes of the real part (x) and imaginary part (y) of the test signal, which are controlled from a common data memory (94), and In that the digital control device (104, 106, 120; 160, 162) further comprises a component (120) for phase control of the test signal, which is connected after or before the first said components (104, 106), and which is controlled from its own data memory (96).

3. Apparatus according to claim 2, characterized in that, the components (104, 106) for the digital control of the magnitudes of the real part (x) and imaginary part (y) of the test signal are implemented by multiplying digital-analog converters available in the trade.

4. Apparatus according to claim 1, characterized in that, with the test signal in polar coordinates as magnitude (/A/) and angle ($\phi$ ) there are provided a digitally controllable component (160) for control of the magnitude (/A/) and a further digitally controllable component (162) for control of the angle ($\phi$ ), which are each controlled from a separate data memory (164, 166).

5. Apparatus according to one of the preceding claims, characterized in that, PROMs or EPROMs are employed as data memories (94, 96; 164, 166).

6. Apparatus according to one of the preceding claims, characterized in that, the digital control signal whose height depends on the spacing (h) from the surface to be tested is derived from the same winding (18) of the test probe (10) as the test signal.

## Revendications

1. Appareil de contrôle de la surface (12) d'une pièce métallique, à contrôler (14) du point de vue de la non-homogénéité (26), comportant au moins une sonde de contrôle (10), qui crée dans la surface (12) à contrôler des courants de Foucault et la sortie de laquelle, en fonction de la non-homogénéité à partir de la réaction des courants de Foucault sur la sonde de contrôle (10), est produit un signal de contrôle, qui est modulé en fonction de la distance (h) de la sonde de contrôle (10) par rapport à la surface (12) à contrôler, comportant des moyens pour décomposer le signal de contrôle suivant une partie réelle (x) et une partie imaginaire (y) ou suivant un module (/A/) et un angle ($\phi$ ), comportant un dispositif de commande numérique (104, 106, 120, 160, 162) pour commander le signal de contrôle, comportant des moyens de dérivation d'un signal de commande numérique (74, 80, 88), dont la hauteur est fonction de la distance (h) de la sonde de contrôle à la surface à contrôler, caractérisé en ce que les moyens de dérivation du signal de commande numérique (74, 80, 88) offrent a leur sortie, ce signal de contrôle à des intervalles de temps fixes ou variables, en ce que cette sortie est reliée avec l'entrée d'adresses d'au moins deux mémoires de données (94, 96) programmables, le signal de commande numérique étant affecté à des valeurs pré-programmées, en ce que le dispositif de commande numérique (104, 106, 120; 160, 162) est réalisé de telle façon que, pour la partie réelle (x) , la partie imaginaire (Y) et l'angle de phase associé, ou pour le module (/A/) et l'angle ($\phi$) , du signal de contrôle, sont chaque fois prévus des organes de commande numériques propres (104, 106, 120; 160, 162) , en ce que les sorties de données des mémoires de stockage de données (94, 96) programmables sont chacune reliées avec les entrées de commande (100, 102, 118) des dispositifs de commande numériques(104, 106, 120, 160, 162) concernés et commandent ceux-ci de telle façon que le signal de contrôle soit indépendant, en ce qui concerne le module et la phase, de la distance (h).

**2.** Appareil suivant la revendication 1, caractérisé en ce que le dispositif de commande numérique (104, 106, 120; 160, 162) présente deux organes (104, 106), pour la commande numérique des valeurs de la partie réelle (x) et de la partie imaginaire (Y) du signal de contrôle, qui sont commandées par une mémoire de stockage de données commune (94), et en ce que, de plus, le dispositif de commande numérique (104, 106, 120; 160, 162) présente un organe (120) pour la commande de phase du signal de contrôle qui est branché derrière ou devant les organes (104, 106) précédemment cités et qui est commandé par sa propre mémoire de stockage de données (96).

**3.** Appareil suivant la revendication 2, caractérisé en ce que les organes (104, 106) pour la commande numérique des valeurs absolues de la partie réelle (x) et de la partie imaginaire (y) du signal de contrôle sont réalisés par un convertisseur numérique/analogique multiplicateur du commerce.

**4.** Appareil suivant la revendication 1, caractérisé en ce que, si le signal de contrôle se présente en coordonnées polaires sous la forme d'un module (/A/) et d'un angle ($\phi$), un organe pouvant être commandé numériquement (160) est prévu pour la commande du module (/A/) et un autre organe pouvant être commandé numériquement (162) est prévu pour la commande de l'angle (ϛ) organes qui sont commandés par des mémoires de stockage de données (164, 166) distinctes.

**5.** Appareil suivant l'une quelconque des revendications précédentes, caractérisé en ce que, comme mémoires de stockage de données (94, 96; 164, 166)), on utilise des PROM ou des EPROM.

**6.** Appareil suivant l'une quelconque des revendications précédentes, caractérisé en ce que le signal de commande digital, dont la hauteur est fonction de la distance (h) par rapport à la surface à contrôler, est obtenu à partir du même enroulement (18) de la sonde de contrdle (10) que le signal de contrôle.

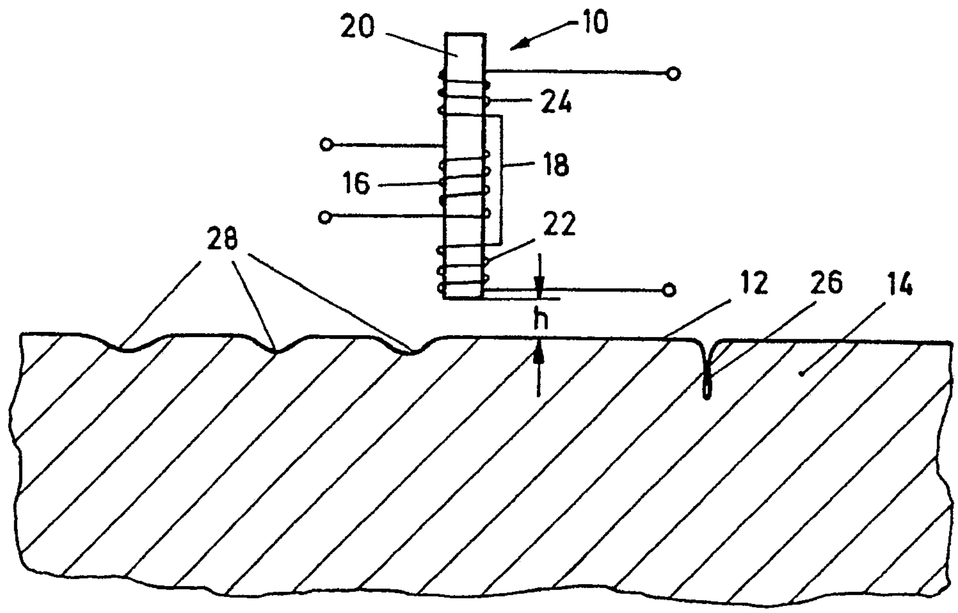


Fig. 1

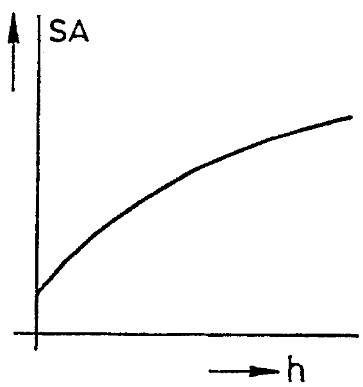


Fig. 2

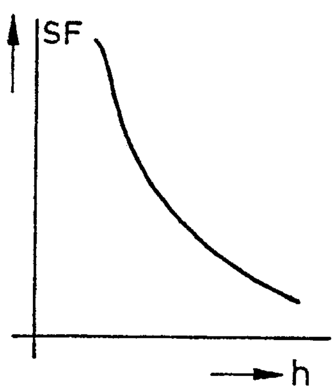


Fig. 3

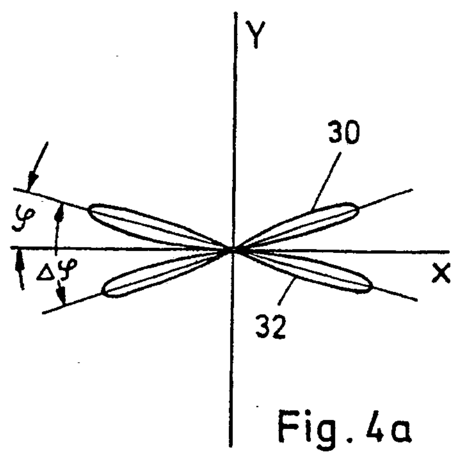


Fig. 4a

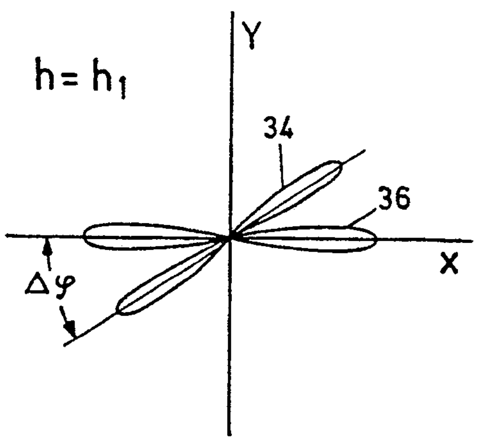


Fig. 4b

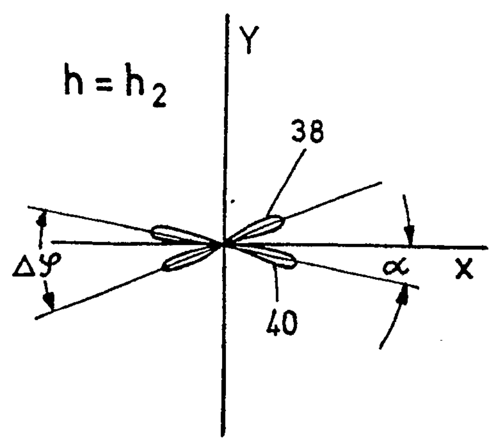


Fig. 4c

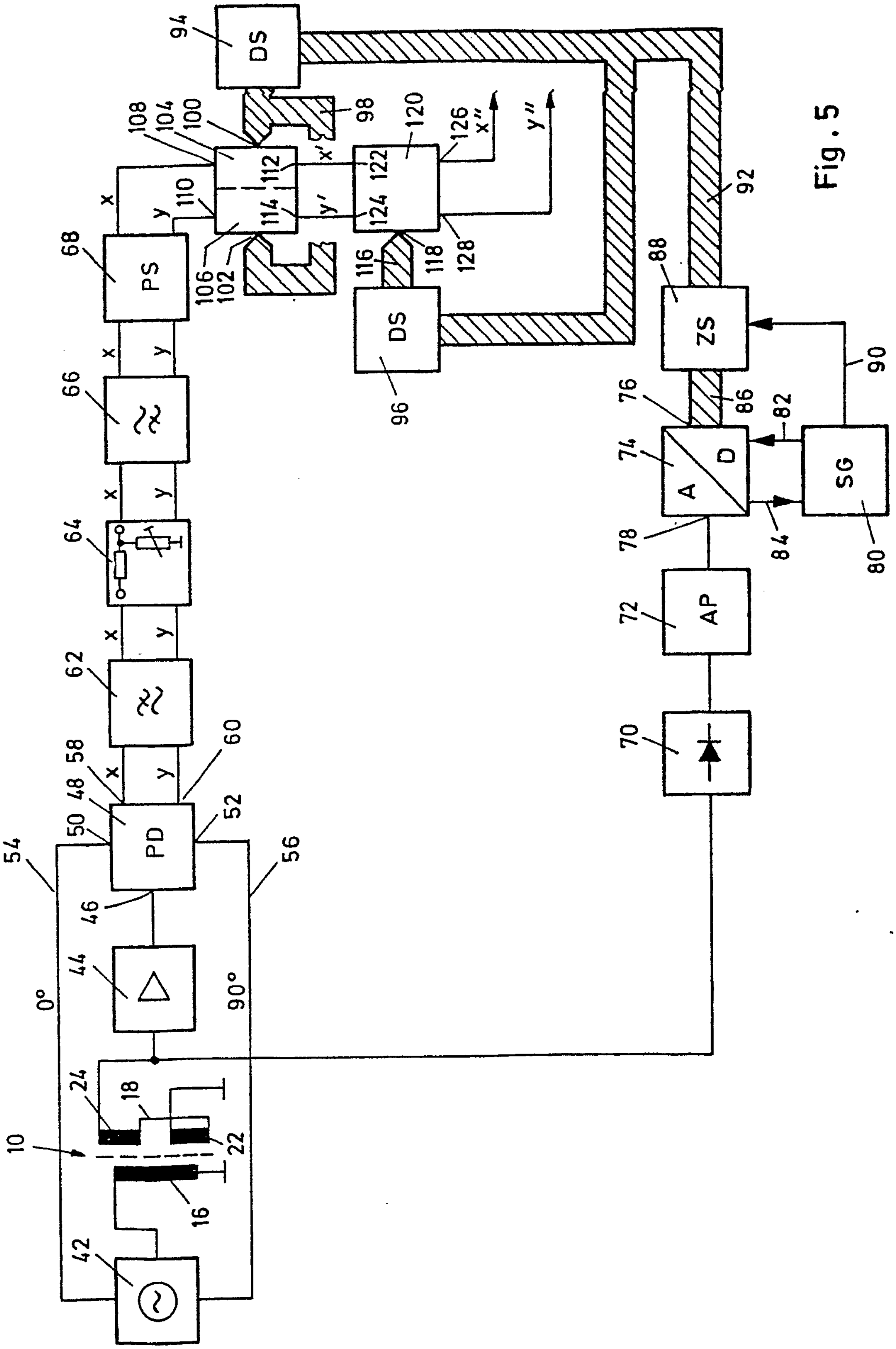


Fig. 5

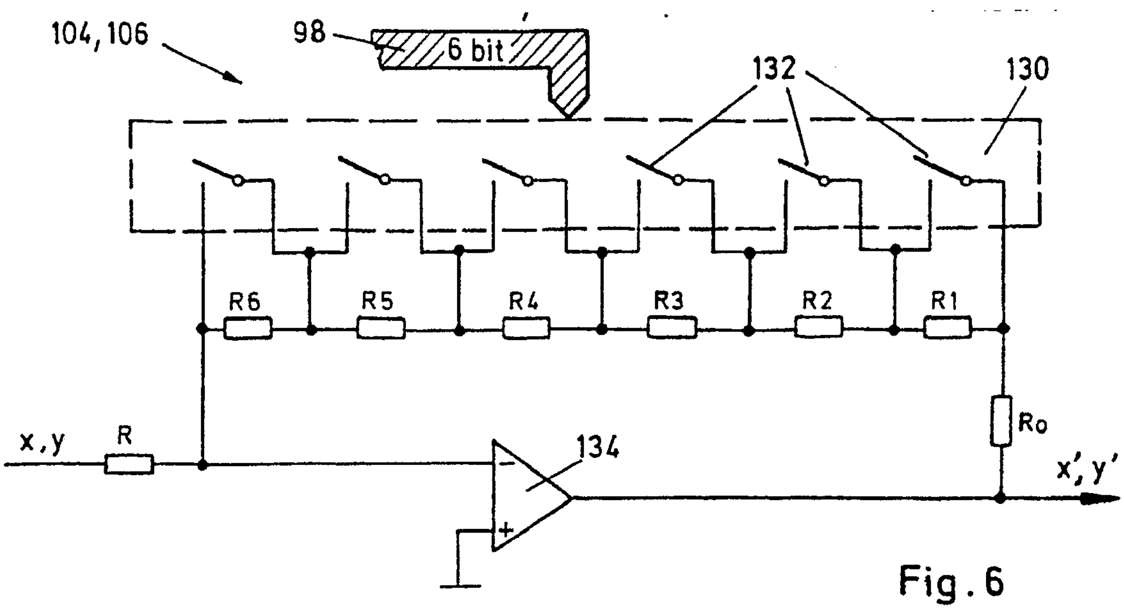


Fig. 6

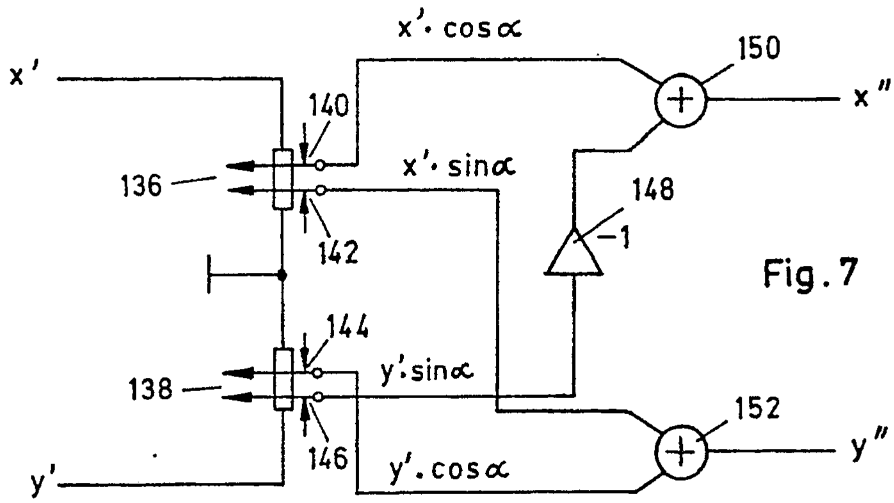


Fig. 7

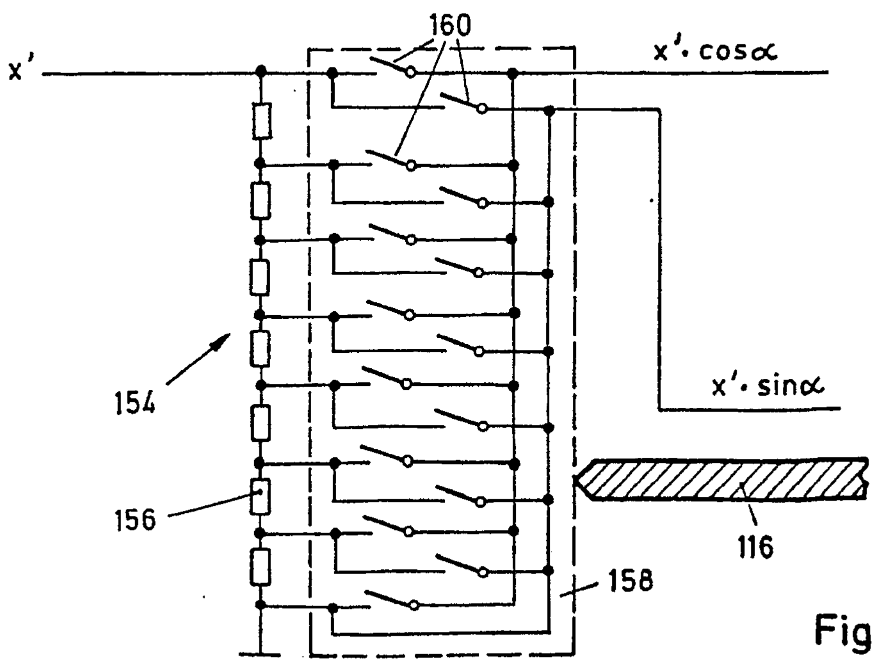


Fig. 8

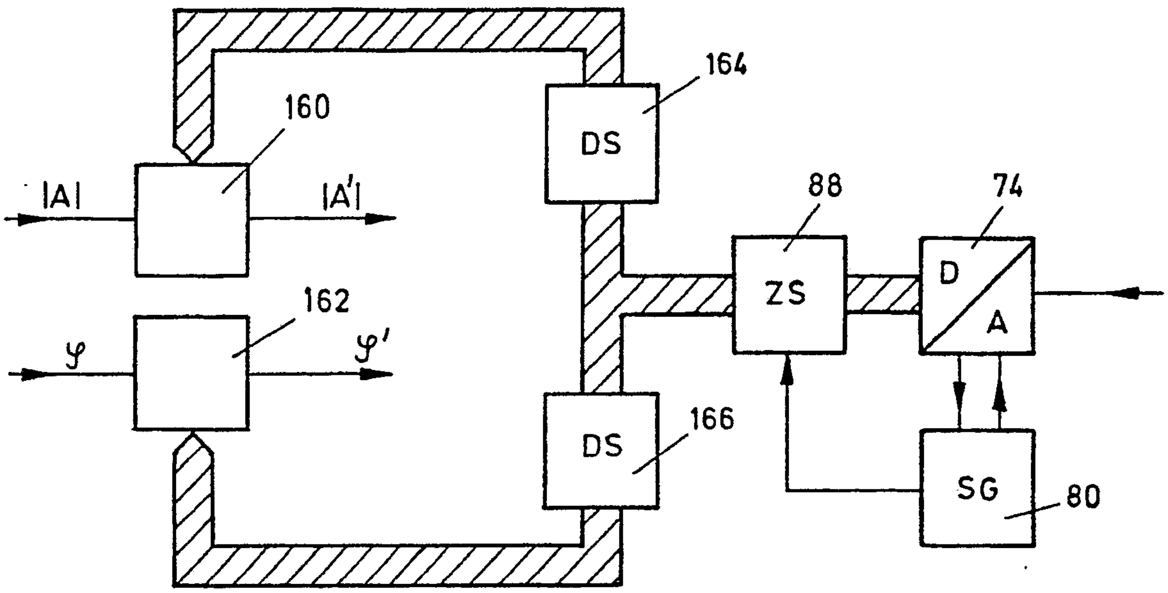


Fig. 9